# EUROPEAN PATENT SPECIFICATION

(11) **EP 2 021 597 B1**
(45) Date of publication and mention of the grant of the patent: **06.01.2016**
(21) Application number: 07794659.8
(22) Date of filing: 08.05.2007
(51) Int. Cl.: B21D 11/10, B21D 19/00, B21D 5/04, B21D 35/00

(54) **CHANNEL LETTER MACHIINE AND METHOD THEREOF**
KANALBUCHSTABENMASCHINE UND VERFAHREN DAFÜR
MACHINE À PLIER POUR LETTRE BOÎTIER ET PROCÉDÉ ASSOCIÉ

(30) Priority: 09.05.2006 US 431246
(43) Date of publication of application: 11.02.2009
(73) Proprietor: SDS USA Inc., Northvale NJ 07647 (US)
(72) Inventor: PARK, Ju, Woong, Kyungki-do (KR); CHO, Man, Sik, Kyungki-do (KR); LEE, Sang, Moo, Kyungki-do (KR); SONG, Byoung-young, Old Tappan, NJ 07675 (US)
(74) Representative: Miller, James Lionel Woolverton
(86) International application number: PCT/US2007/011117
(87) International publication number: WO 2007/133550

(56) References cited:
- WO-A1-94/25194
- WO-A1-94/27761
- WO-A1-98/06516
- WO-A2-98/17413
- US-A- 5 970 769

## Description

### BACKGROUND OF THE INVENTION

### 1. Field of the Invention

The present disclosure relates to a folding and cutting system and method, and more particularly to a channel letter machine used for manufacturing a predetermined design from sheet material.

### 2. Description of Related Art

A channel letter includes a face, for example, made from a transparent material such as plastic or metal, and a back, for example, made of metal or plastic. The front face and back can be cut manually or cut using computer controlled routers. The channel letter further includes a return or side of the channel letter disposed to connect the front face and the back.

The return may be made of metal. The return is formed into the shape of the front face and back.

Therefore, a need exists for a channel letter machine for manufacturing the return of a channel letter.

US5970769 discloses a side panel assembly which includes a front wall, a back wall and a side wall which is bent to match the shape of the front and/or back wall. The front wall is connected to the side wall by inserting a fastener through the front wall and a pull-out tab extending from the side wall. A method and apparatus for use in constructing the side panel are also provided. The method and apparatus allow for automation of the lay-out, cutting to length, flanging and notching of the side panel.

### Summary of the invention

According to a first aspect of the invention, there is provided a computer-implemented method of automatically bending a return of a channel letter as claimed in claim 1.

According to a second aspect of the invention, there is provided a channel letter bending machine for automatically bending a return of a channel letter as claimed in claim 6.

### BRIEF DESCRIPTION OF THE DRAWINGS

Preferred embodiments of the present invention will be described below in more detail, with reference to the accompanying drawings:
Figures 1A-C are diagrams of a channel letter machine according to an embodiment of the present disclosure;
Figures 2A-D are diagrams of a guide of a channel letter machine according to an embodiment of the present disclosure;
Figures 3A-C are diagrams of a feeding unit of a channel letter machine according to an embodiment of the present disclosure;
Figures 4A-F are diagrams of a flanging unit of a channel letter machine according to an embodiment of the present disclosure;
Figures 5A-E are diagrams of a notching unit of a channel letter machine according to an embodiment of the present disclosure;
Figures 6A-E are diagrams of cutting tool and bending unit of a channel letter machine according to an embodiment of the present disclosure;
Figure 7 is a flow chart of a method according to an embodiment of the present disclosure; and
Figure 8 is an illustration of a portion of a return of a channel letter.

### DETAILED DESCRIPTION OF PREFERRED EMBODIMENTS

According to an embodiment of the present disclosure, a channel letter machine for forming a return having a predetermined shape comprises a flanging assembly positioned upstream of a notching assembly and a bending assembly, facilitating efficient flanging of a stock by the flanging assembly without first notching the stock.

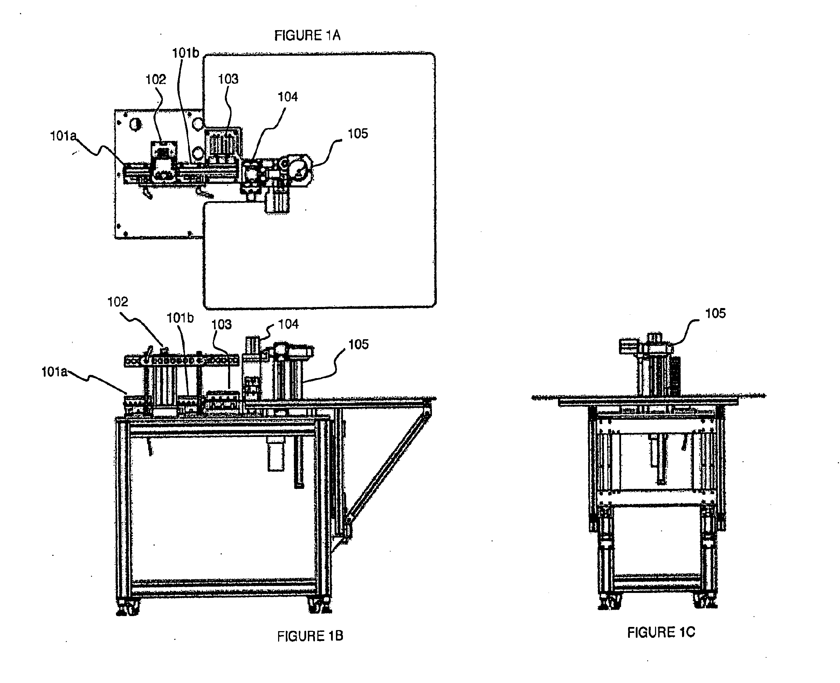

Referring to Figures 1A-C a channel letter machine comprises a guiding units 101a-101b, a feeding unit 102, a flanging unit 103 disposed upstream of a notching unit 104, and a bending unit 105. The channel letter machine further includes a control computer (not shown) for receiving commands for controlling the feeding unit 102, the flanging unit 103, the notching unit 104, and the bending unit 105.

The channel letter machine receives a stock material (hereinafter stock), e.g., a metal sheet material such as aluminum, and forms the return of a channel letter through flanging, notching, and bending operations.

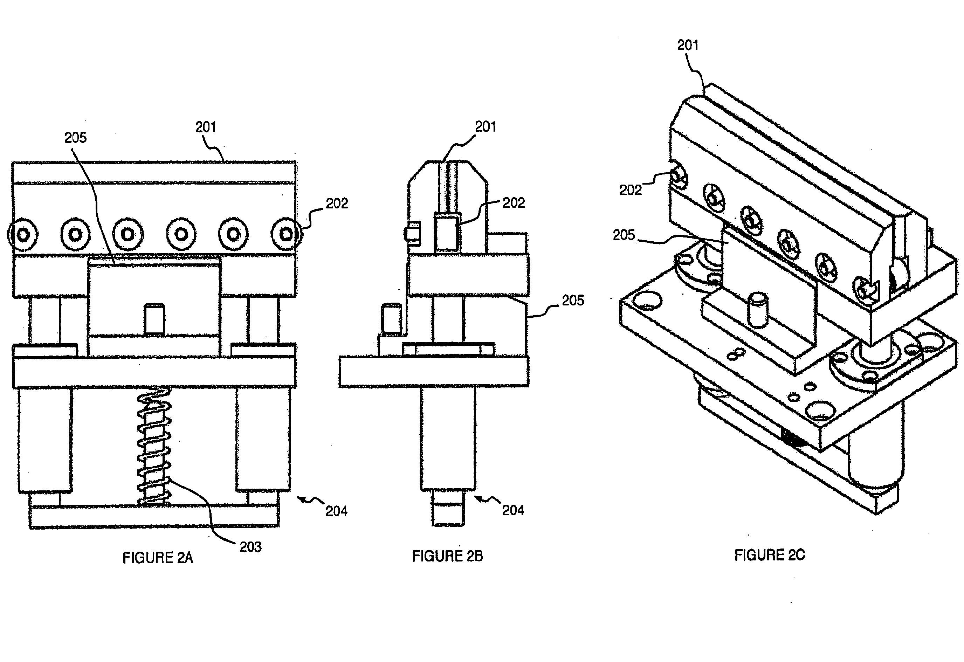

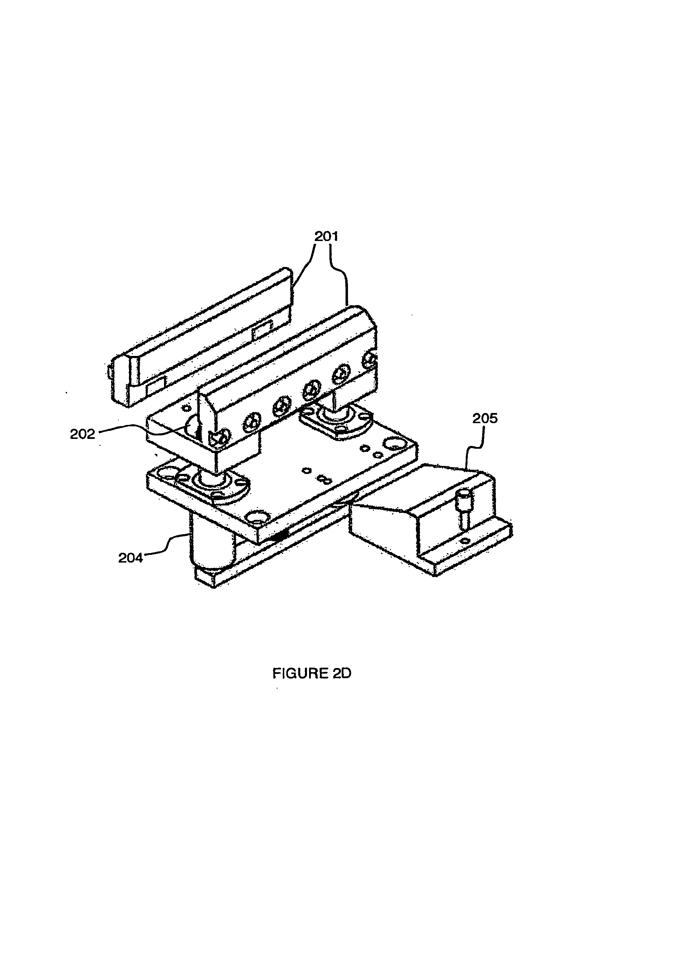

Referring to Figures 2A-C, the guiding units 101a and 101b each include a guide 201, guiding rollers 202, a shock absorber 203, and a height adjustment device 205. The guide 201 holds the stock upright for being received by the feeding unit 102, etc. The guide rollers 202 facilitate movement of the stock into the feeding unit 102 and the flanging unit 103. The guide 201, including the guiding rollers 202, is supported by the height adjustment device 205. The guiding unit 101 includes shafts 204 securing the guiding unit 101 in a horizontal position with respect to the channel letter machine. The guiding unit 101 may move in a vertical direction on the shafts 204, supported by the shock absorber 203 and the height adjustment device 205 (the shock absorber 203 and the height adjustment device 205 operated independently). The height adjustment device 205 adjusts the height of the guide 201, wherein a flanging depth or height can-be adjusted.

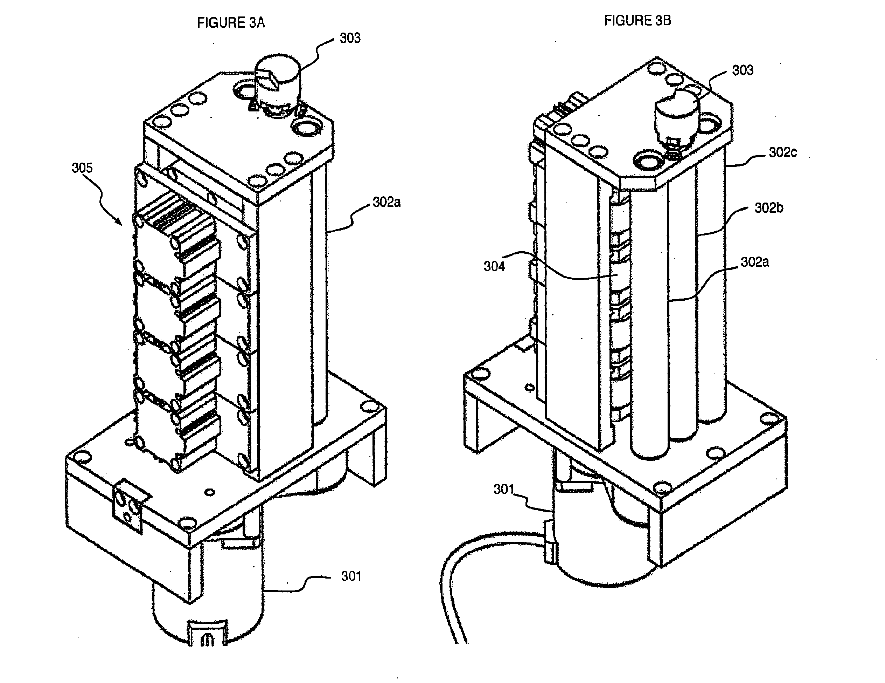

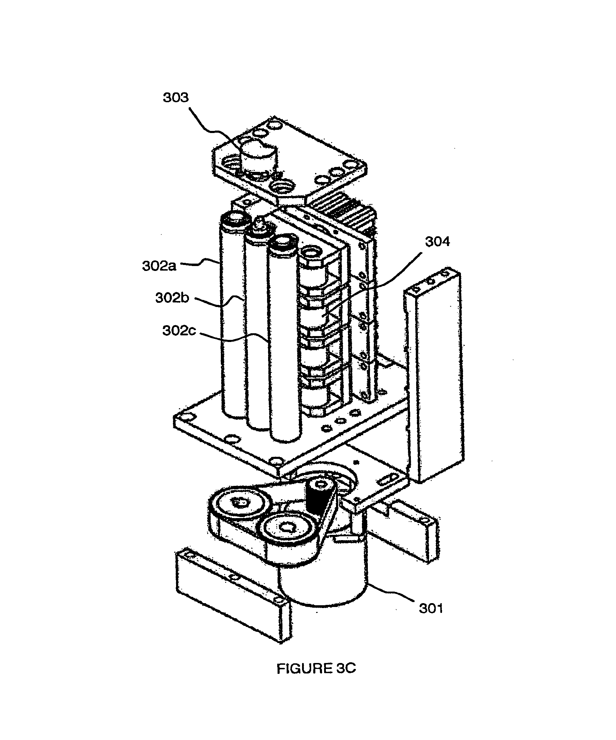

Referring to Figures 3A and 3B, the feeding unit 102 includes a feed motor 301, a feed rollers 302a and 302c, an encoder roller 302b, an encoder 303, and cylinder rollers 304. The feed motor 301 drives the feed rollers 302a and 302c to pass the stock through the channel letter machine. The feeding unit 102 is height adjustable. The encoder 303 reads an actual advance of the stock according to a rotation of an encoder roller 302b, which spins freely. As the stock is passed through the feeding unit 102, the actual advance of the stock is determined. Should there be slippage of the stock against the feed rollers 302a and 302c, the control computer compensates for the slippage, e.g., by performing flanging, notching, and bending according to the actual advance of the stock, such that flanges, notches and bends are formed at the appropriate positions. A plurality of counter rollers 304, e.g., four, may be engaged by corresponding cylinders 305 according to the height of the stock material. The computer determines and actuates the number of counter rollers 304 to engage according the user's input of stock height. The counter rollers 304 are engaged by moving laterally, to press the stock against the feed rollers 302a-c. The counter rollers 304 apply substantially even pressure across the height of the stock and also the same to the top and bottom of feed unit. A number of counter rollers 304 may be controlled by each cylinder 305, for example, three cylinder rollers across, opposing the feeding rollers 302a and 302c, and the encoding roller 302b.

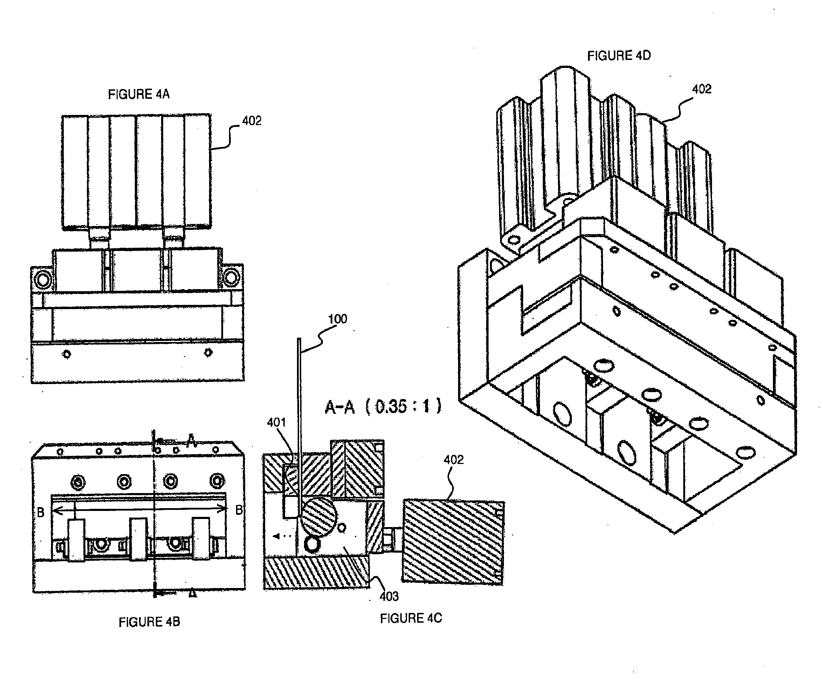

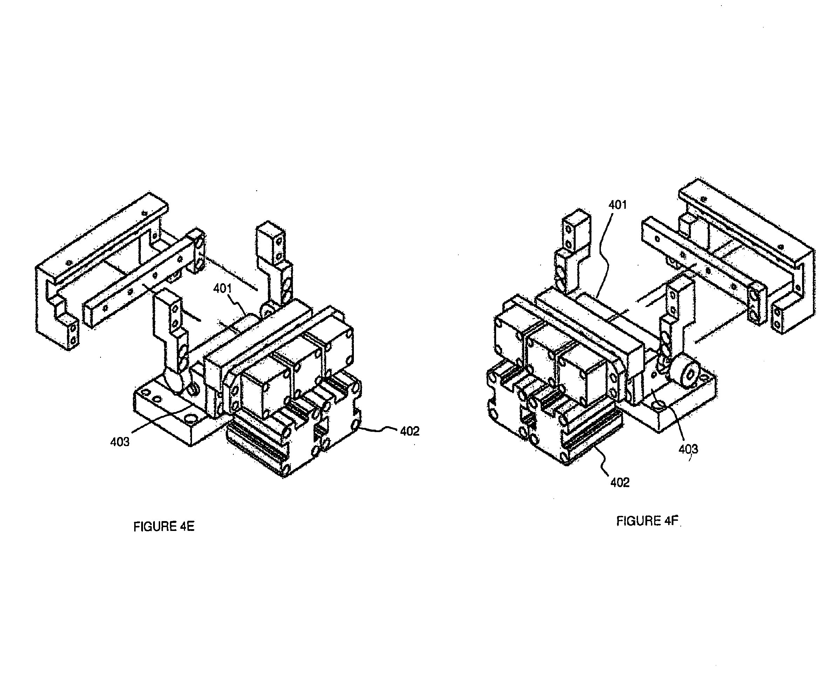

Referring to Figures 4A-4D, the flanging unit 103 includes a flanging roller 401 and a flanging actuator 402. The flanging actuator 402 is engaged to press the flanging roller 401 against the stock 100 to facilitate forming a flange. The flanging actuator pushes a carrier 403 laterally with respect to a surface of the stock 100 protruding into the flanging unit 103 (see Figure 4C). The flanging roller 401 is disposed in the carrier 403 and is pressed against the stock 100 forming a flange. The flanging unit 103 cuts the stock 100 at the end positions of the flanges. The edge of the roller 401 works as a cutting tool to cut the flange, such that a flange may have one or more portions having a length equal to or less than a length of the flanging unit shown as B-B in Figure 4B.

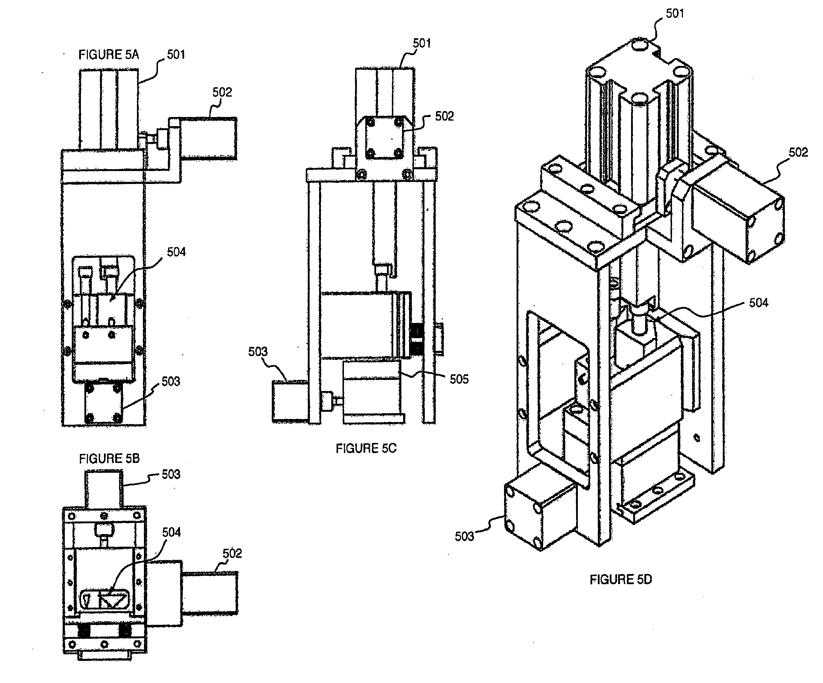

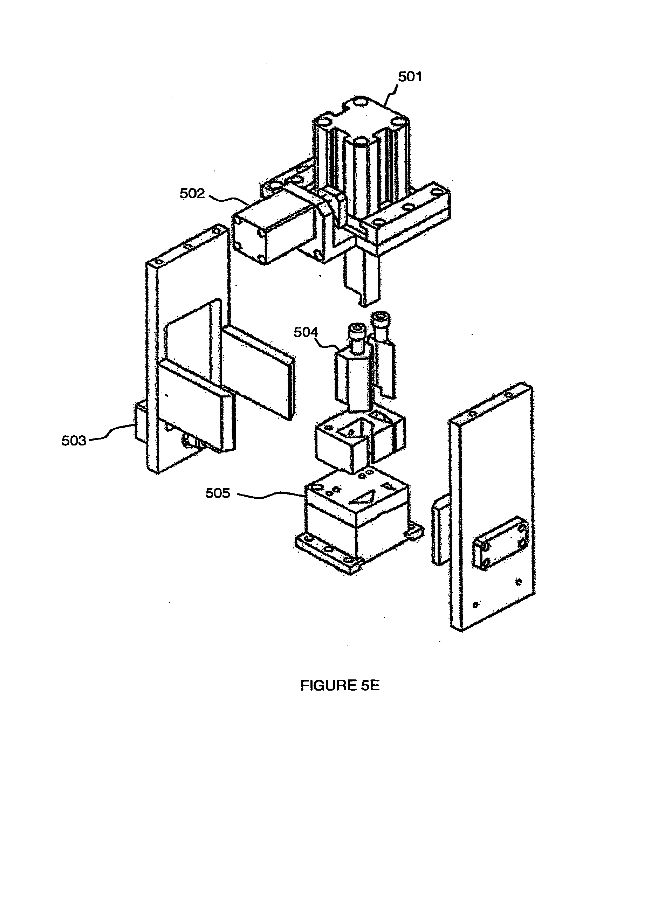

Referring to Figures 5A-D, a notching unit 104 includes a notch actuator 501, a notch selector 502, a stock engager 503 and at least one a notch cutter 504. As depicted in Figure 5B, a bottom view of the notching unit 104, two different sized notch cutters may be implemented. The notch selector 502 selects a notch of a given size according to a desired configuration. The notch actuator 501 engages a selected cutter against a flange of the stock to cut a notch in the flange. The stock engager 503 includes a movable portion 505 that rises to push the stock against an opposite wall holding a flange of the stock firmly in place during the notching operation.

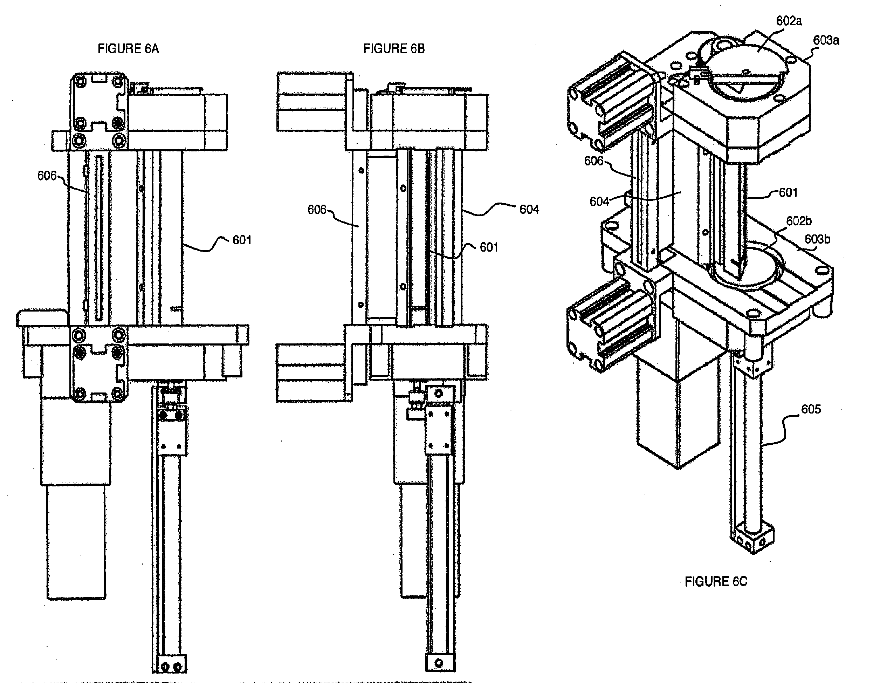

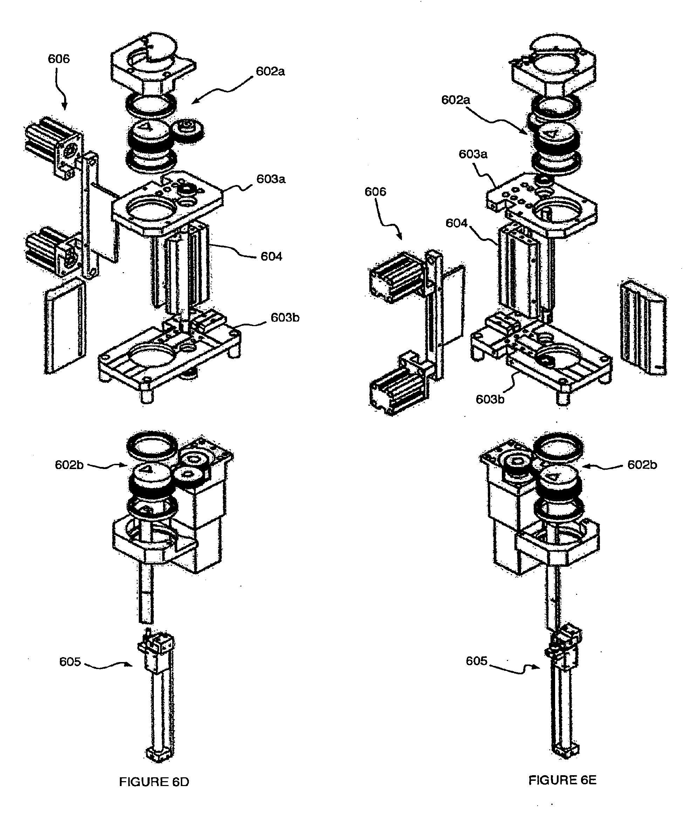

Referring to Figure Figures 6A-C, the bending unit 105 comprises a bending finger 601 and rotary bodies 602a and 602b for rotating the bending finger 601. The rotary bodies 602a and 602b are set in supporting frames 603a and 603b. The bending unit 105 includes a bending nozzle 604 of a size through which the stock, including the flanges, can be passed. The bending finger 601 is engaged by a bending finger actuator 605. The bending finger actuator 605 guides the bending finger 601 into place between the rotary bodies 602a and 602b. The bending finger 601, once disposed between the rotary bodies 602a and 602b may be rotated by the rotary bodies 602a and 602b to facilitate the bending function. The bending unit 105 further includes a cutting tool 606 for cutting the stock to a desired length. The cutting tool 606 moves in a direction substantially perpendicular to a plane of the stock, slicing the stock at end positions.

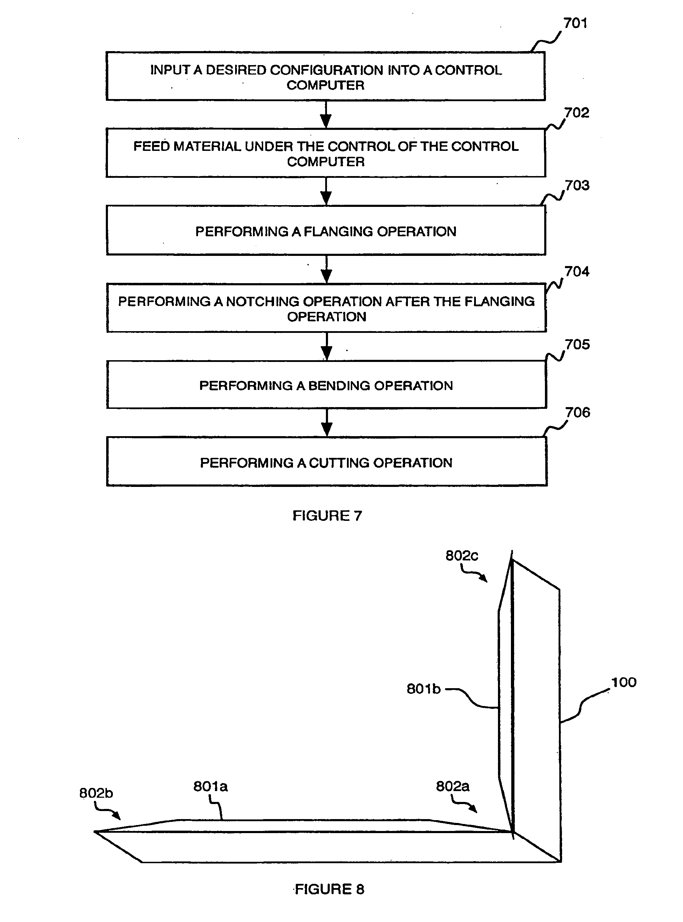

Referring to Figure 7, a method of automatically bending a return of a channel letter includes inputting a desired configuration for the return to be formed into a control computer 701, and feeding a stock under the control of the control computer 702 along a feed path including a flanging unit, a notching unit, and a bending unit that are arranged along the feed path for the stock, with the flanging unit being located upstream of the notching unit and the bending unit along the feed path. The method further includes forming the flange on the bottom of the stock at desired flange positions on the stock at the flanging unit under the control of the control computer 703, notching a flange of the stock at locations corresponding to a position of bends at the notching unit under the control of the control computer 704, and bending the stock at the positions of the bends into the desired configuration for the return at the bending unit under the control of the control computer 705. The stock may be cut at a cutting unit of the bending unit 706.

Each of a feeding operation, a flanging operation, a notching operation, and a bending operation are performed according to an input, e.g., inputs from a computer or user commands. According to the input a return may be formed without a flange, without a notch, and/or without a bend.

Figure 8 depicts an exemplary stock 100, having flanges 801a-b, and notches 802a-c.

The control computer of the may be implemented in various forms of hardware, software, firmware, special purpose processors, or a combination thereof. In one embodiment, user commands may be implemented by software such as an application program tangibly embodied on a program storage device. The application program may be uploaded to, and executed by, a machine comprising any suitable architecture.

The control computer can comprise, *inter alia,* a central processing unit (CPU), a memory and an input/output (I/O) interface. The computer system is coupled through the I/O interface to the feeding unit 102, the flanging unit 103, the notching unit 104 and the bending unit 105. The computer system may include various input devices such as a mouse and keyboard. User commands may be processed by a routine that is stored in memory and executed by the CPU. As such, the computer system is a general purpose computer system that becomes a specific purpose computer system when executing the routine.

## Claims

1. A computer-implemented method of automatically bending a return of a channel letter comprises:
inputting a desired configuration for the return to be formed into a control computer (704);
feeding a stock (100) under the control of the control computer (704) along a feed path including an encoder (303), a flanging unit (103), a notching unit (104), and a bending unit (105) that are arranged along the feed path for the stock (100), with the flanging unit (103) being located upstream of the notching unit (104) and the bending unit (105) along the feed path;
forming a flange on the bottom of the stock at desired flange positions on the stock (100) at the flanging unit (103) by engagement of a flanging actuator (402) to press a flanging roller (401) against the stock (100) under the control of the control computer (704);
notching the flange of the stock (100) at locations corresponding to a position of bends at the notching unit (104) under the control of the control computer (704); and
bending the stock (100) at the positions of the bends into the desired configuration for the return at the bending unit (105) under the control of the control computer (704),
**characterised in that**
each of feeding, flanging, notching and bending are performed according to an input and according to the input a return may be formed without a flange, notch and/or without a bend.

2. The computer-implemented method of claim 1, further comprising cutting the stock (100) at a cutting unit.

3. The computer-implemented method of claim 1, further comprising setting a height of at least one guide (201) for controlling a depth of the flange.

4. The computer- implemented method of claim 1, wherein feeding the stock (100) under the control of the control computer (704) further comprises:
determining an amount of stock (100) passing an encoder (303); and
performing at least one of the steps of forming the flange, notching the flange, and bending the stock (100) according to the amount of stock (100) passing the encoder (303).

5. The computer-implemented method of claim 1, wherein forming the flange further comprises cutting the flange.

6. A channel letter bending machine for automatically bending a return of a channel letter from a stock (100), comprising:
a control computer for receiving a desired configuration for the return of the channel letter;
a feeding unit (102) controlled by the control computer (704) disposed along a path of travel of the stock (100) to be bent for feeding the stock (100), wherein the feeding unit (102) comprises an encoder (303) for determining an amount of stock passing through the feeding unit (102);
a flanging unit (103), comprising an engageable flanging actuator (402) and a flanging roller (401), which can be pressed by said flanging actuator (402), disposed along the path of travel for forming a flange along one edge of the stock (100) at desired flange positions on the stock (100);
a notching unit (104) disposed along the path of travel for notching the flange of the stock (100) fed by the feeding mechanism along the path of travel; and
a bending unit (105) disposed along the path of travel for bending the stock (100) under the control of the computer control system (704) into the desired configuration for the channel letter shape, wherein the flanging unit (103) is disposed upstream of the notching unit (104), **characterised in that**
the machine is configured with each of feeding, flanging, notching and bending being performed according to an input and according to the input a return may be formed without a flange, notch and/or without a bend.

7. The channel letter bending machine of claim 6, wherein the bending unit (105) further comprises a cutting unit (504) for cutting the stock (100).

8. The channel letter bending machine of claim 6, further comprising at least one guide (201) for setting a depth of the flange.

9. The channel letter bending machine of claim 8, wherein a first guide (201) is disposed upstream of the feeding unit (102).

10. The channel letter bending machine of claim 8, wherein a first guide (201) is disposed downstream of the feeding unit (102).

11. The channel letter bending machine of claim 8 wherein the at least one guide (201) is height adjustable for setting a depth of the flange.

12. The channel letter bending machine of claim 6, wherein the control computer (704) transmits commands to at least one of the feeding unit (102), the flanging unit (103), the notching unit (104), and the bending unit (105) according to the amount of stock (100) passing through the feeding unit (102).

13. The channel letter bending machine of claim 6, wherein the notching unit (104) and the flanging unit (103) are disposed upstream of the bending unit (105).

## Patentansprüche

1. Computerimplementiertes Verfahren zum automatischen Biegen einer Zarge eines Profilbuchstabens, umfassend:
Eingeben einer gewünschten Konfiguration für die zu bildende Zarge in einen Steuercomputer (704);
Zuführen eines Materials (100) unter der Steuerung des Steuercomputers (704) entlang eines Zufuhrwegs, der einen Encoder (303), eine Flanschbildungseinheit (103), eine Einkerbungseinheit (104) und eine Biegeeinheit (105) aufweist, die entlang des Zufuhrwegs für das Material (100) angeordnet sind, wobei die Flanschbildungseinheit (103) vor der Einkerbungseinheit (104) und der Biegeeinheit (105) entlang des Zufuhrwegs angeordnet ist;
Bilden eines Flanschs an der Unterseite des Materials an gewünschten Flanschpositionen am Material (100) an der Flanschbildungseinheit (103) durch den Eingriff eines Flanschbildungs-Betätigungselements (402) zum Drücken einer Flanschbildungswalze (401) gegen das Material (100) unter der Steuerung des Steuercomputers (704);
Einkerben des Flanschs des Materials (100) an Stellen, die einer Position von Biegungen entsprechen, an der Einkerbungseinheit (104) unter der Steuerung des Steuercomputers (704); und
Biegen des Materials (100) an den Positionen der Biegungen in die gewünschte Konfiguration für die Zarge an der Biegeeinheit (105) unter der Steuerung des Steuercomputers (704),
**dadurch gekennzeichnet, dass**
alle von Zuführen, Bilden des Flanschs, Einkerben und Biegen gemäß einer Eingabe durchgeführt werden und eine Zarge gemäß der Eingabe ohne Flansch, Einkerbung und/oder ohne Biegung gebildet werden kann.

2. Computerimplementiertes Verfahren nach Anspruch 1, des Weiteren umfassend Schneiden des Materials (100) an einer Schneideinheit.

3. Computerimplementiertes Verfahren nach Anspruch 1, des Weiteren umfassend Festlegen einer Höhe zumindest einer Führung (201) zum Regulieren einer Tiefe des Flanschs.

4. Computerimplementiertes Verfahren nach Anspruch 1, wobei das Zuführen des Materials (100) unter der Steuerung des Steuercomputers (704) des Weiteren Folgendes umfasst:
Bestimmen einer Menge von Material (100), die einen Encoder (303) passiert; und
Durchführen von zumindest einem der Schritte von Bilden des Flanschs, Einkerben des Flanschs und Biegen des Materials (100) entsprechend der Menge von Material (100), die den Encoder (303) passiert.

5. Computerimplementiertes Verfahren nach Anspruch 1, wobei das Bilden des Flanschs des Weiteren das Schneiden des Flanschs umfasst.

6. Biegemaschine für einen Profilbuchstaben zum automatischen Biegen einer Zarge eines Profilbuchstabens aus einem Material (100), umfassend:
einen Steuercomputer zum Empfangen einer gewünschten Konfiguration für die Zarge des Profilbuchstabens;
eine Zufuhreinheit (102), gesteuert durch den Steuercomputer (704), angeordnet entlang eines Fortbewegungswegs des zu biegenden Materials (100), für das Zuführen des Materials (100), wobei die Zufuhreinheit (102) einen Encoder (303) zum Bestimmen einer Menge von Material, die die Zufuhreinheit (102) durchläuft, umfasst;
eine Flanschbildungseinheit (103), umfassend ein in Eingriff bringbares Flanschbildungs-Betätigungselement (402) und eine Flanschbildungswalze (401), die vom Flanschbildungs-Betätigungselement (402) gedrückt werden kann, angeordnet entlang des Fortbewegungswegs, zum Bilden eines Flanschs entlang einer Kante des Materials (100) an gewünschten Flanschpositionen am Material (100);
eine Einkerbungseinheit (104), angeordnet entlang des Fortbewegungswegs, zum Einkerben des Flanschs des Materials (100), das vom Zufuhrmechanismus entlang des Fortbewegungswegs zugeführt wird; und
eine Biegeeinheit (105), angeordnet entlang des Fortbewegungswegs, zum Biegen des Materials (100) unter der Steuerung des Computersteuersystems (704) in die gewünschte Konfiguration für die Form des Profilbuchstabens, wobei die Flanschbildungseinheit (103) vor der Einkerbungseinheit (104) angeordnet ist,
**dadurch gekennzeichnet, dass**
die Maschine derart konfiguriert ist, dass alle von Zuführen, Bilden des Flanschs, Einkerben und Biegen gemäß einer Eingabe durchgeführt werden und eine Zarge gemäß der Eingabe ohne Flansch, Einkerbung und/oder ohne Biegung gebildet werden kann.

7. Biegemaschine für einen Profilbuchstaben nach Anspruch 6, wobei die Biegeeinheit (105) des Weiteren eine Schneideinheit (504) zum Schneiden des Materials (100) umfasst.

8. Biegemaschine für einen Profilbuchstaben nach Anspruch 6, des Weiteren umfassend zumindest eine Führung (201) zum Festlegen einer Tiefe des Flanschs.

9. Biegemaschine für einen Profilbuchstaben nach Anspruch 8, wobei eine erste Führung (201) vor der Zufuhreinheit (102) angeordnet ist.

10. Biegemaschine für einen Profilbuchstaben nach Anspruch 8, wobei eine erste Führung (201) nach der Zufuhreinheit (102) angeordnet ist.

11. Biegemaschine für einen Profilbuchstaben nach Anspruch 8, wobei die zumindest eine Führung (201) höhenverstellbar zum Festlegen einer Tiefe des Flanschs ist.

12. Biegemaschine für einen Profilbuchstaben nach Anspruch 6, wobei der Steuercomputer (704) Befehle an zumindest eine der Zufuhreinheit (102), der Flanschbildungseinheit (103), der Einkerbungseinheit (104) und der Biegeeinheit (105) entsprechend der Menge von Material (100) überträgt, die die Zufuhreinheit (102) durchläuft.

13. Biegemaschine für einen Profilbuchstaben nach Anspruch 6, wobei die Einkerbungseinheit (104) und die Flanschbildungseinheit (103) vor der Biegeeinheit (105) angeordnet sind.

## Revendications

1. Procédé mis en oeuvre par ordinateur pour plier automatiquement un retour d'une lettre profilée comprenant :
l'entrée d'une configuration souhaitée pour le retour à former dans un ordinateur de commande (704) ;
l'amenée d'une matière de départ (100) sous la commande de l'ordinateur de commande (704) le long d'un chemin d'amenée incluant un codeur (303), une unité de bordage (103), une unité d'encochage (104) et une unité de pliage (105) qui sont agencées le long du chemin d'amenée pour la matière de départ (100), l'unité de bordage (103) étant située en amont de l'unité d'encochage (104) et l'unité de pliage (105) le long du chemin d'amenée ;
la formation d'un rebord sur le fond de la matière de départ à des positions de rebord souhaitées sur la matière de départ (100) au niveau de l'unité de bordage (103) par la mise en prise d'un actionneur de bordage (402) pour presser un rouleau de bordage (401) contre la matière de départ (100) sous la commande de l'ordinateur de commande (704) ;
l'encochage du rebord de la matière de départ (100) en des emplacements correspondant à une position de plus au niveau de l'unité d'encochage (104) sous la commande de l'ordinateur de commande (704) ; et
le pliage de la matière de départ (100) au niveau des positions de plus dans la configuration souhaitée pour le retour au niveau de l'unité de pliage (105) sous la commande de l'ordinateur de commande (704),
**caractérisé en ce que**,
chacun de l'amenée, du bordage, de l'encochage et du pliage est effectué selon une entrée et selon l'entrée un retour peut être formé sans rebord, encoche et/ou sans pli.

2. Procédé mis en oeuvre par ordinateur selon la revendication 1, comprenant en outre la coupe d'une matière de départ (100) au niveau d'une unité de coupe.

3. Procédé mis en oeuvre par ordinateur selon la revendication 1, comprenant en outre le réglage d'une hauteur d'au moins un guide (201) pour maîtriser une profondeur du rebord.

4. Procédé mis en oeuvre par ordinateur selon la revendication 1, dans lequel l'amenée de la matière de départ (100) sous la commande de l'ordinateur de commande (704) comprend en outre :
la détermination d'une quantité de matière de départ (100) passant par un codeur (303) ; et
l'exécution d'au moins une des étapes de formation du rebord, encochage du rebord et pliage de la matière de départ (100) selon la quantité de matière de départ (100) passant par le codeur (303).

5. Procédé mis en oeuvre par ordinateur selon la revendication 1, dans lequel la formation du rebord comprend en outre la coupe du rebord.

6. Machine de pliage de lettre profilée pour plier automatiquement un retour d'une lettre profilée à partir d'une matière de départ (100), comprenant :
un ordinateur de commande pour recevoir une configuration souhaitée pour le retour de la lettre profilée ;
une unité d'amenée (102) commandée par l'ordinateur de commande (704) disposée le long d'un chemin de parcours de la matière de départ (100) à plier pour amener la matière de départ (100), dans laquelle l'unité d'amenée (102) comprend un codeur (303) pour déterminer une quantité de matière de départ passant par l'unité d'amenée (102) ;
une unité de bordage (103), comprenant un actionneur de bordage pouvant être mis en prise (402) et un rouleau de bordage (401), qui peut être pressé par ledit actionneur de bordage (402), disposé le long du chemin de parcours pour former un rebord le long d'un bord de la matière de départ (100) à des positions de rebord souhaitées sur la matière de départ (100) ;
une unité d'encochage (104) disposée le long du chemin de parcours pour encocher le rebord de la matière de départ (100) amenée par le mécanisme d'amenée le long du chemin de parcours ; et
une unité de pliage (105) disposée le long du chemin de parcours pour plier la matière de départ (100) sous la commande du système de commande par ordinateur (704) dans la configuration souhaitée pour la forme de lettre profilée, dans laquelle l'unité de bordage (103) est disposée en amont de l'unité d'encochage (104), **caractérisée en ce que**
la machine est configurée avec chacun de l'amenée, du bordage, de l'encochage et du pliage qui est effectué selon une entrée et selon l'entrée un retour peut être formé sans rebord, encoche et/ou sans pli.

7. Machine de pliage de lettre profilée selon la revendication 6, dans laquelle l'unité de pliage (105) comprend en outre une unité de coupe (504) pour couper la matière de départ (100).

8. Machine de pliage de lettre profilée selon la revendication 6, comprenant en outre au moins un guide (201) pour régler une profondeur du rebord.

9. Machine de pliage de lettre profilée selon la revendication 8, dans laquelle un premier guide (201) est disposé en amont de l'unité d'amenée (102).

10. Machine de pliage de lettre profilée selon la revendication 8, dans laquelle un premier guide (201) est disposé en aval de l'unité d'amenée (102).

11. Machine de pliage de lettre profilée selon la revendication 8 dans laquelle l'au moins un guide (201) est réglable en hauteur pour régler une profondeur du rebord.

12. Machine de pliage de lettre profilée selon la revendication 6, dans laquelle l'ordinateur de commande (704) transmet des ordres à l'au moins une de l'unité d'amenée (102), de l'unité de bordage (103), de l'unité d'encochage (104) et de l'unité de pliage (105) selon la quantité de matière de départ (100) passant par l'unité d'amenée (102).

13. Machine de pliage de lettre profilée selon la revendication 6, dans laquelle l'unité d'encochage (104) et l'unité de bordage (103) sont disposées en amont de l'unité de pliage (105).
